(19) Europäisches Patentamt
European Patent Office
Office européen des brevets

(11) Veröffentlichungsnummer: **0 073 178**
**B1**

(12) **EUROPÄISCHE PATENTSCHRIFT**

(45) Veröffentlichungstag der Patentschrift: **29.05.85**

(51) Int. Cl.⁴: **C 09 B 62/085**, D 06 P 3/66

(21) Anmeldenummer: **82810346.5**

(22) Anmeldetag: **20.08.82**

(54) **Reaktivfarbstoffe, deren Herstellung und Verwendung.**

(30) Priorität: **26.08.81 CH 5512/81**

(43) Veröffentlichungstag der Anmeldung: **02.03.83 Patentblatt 83/9**

(45) Bekanntmachung des Hinweises auf die Patenterteilung: **29.05.85 Patentblatt 85/22**

(84) Benannte Vertragsstaaten: **BE CH DE FR GB IT LI**

(56) Entgegenhaltungen:
**EP-A-0 014 844**
**DE-A-2 033 279**
**DE-A-2 731 617**
**FR-A-1 274 494**
**FR-A-2 307 852**
**PL-A-94 744**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Postfach, CH-4002 Basel (CH)**

(72) Erfinder: **Seiler, Herbert, Dr., Leimgrubenweg 60, CH-4125 Riehen (CH)**

**EP 0 073 178 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Reaktivfarbstoffe werden in großem Umfange für das Färben und Bedrucken von textilen Fasermaterialien eingesetzt. Obwohl heute eine große Anzahl von brauchbaren Reaktivfarbstoffen mit unterschiedlichen Eigenschaften und für verschiedene Anwendungsbereiche zur Verfügung steht, kann der erreichte technische Stand, angesichts der hohen Anforderungen in bezug auf Eignung für bestimmte Färbeverfahren und Echtheitsniveau der Färbungen, vielfach nicht voll befriedigen.

Das gilt auch für Reaktivfarbstoffe im Druck. Das vorhandene Angebot an qualitativ hochwertigen Druckfarbstoffen ist, besonders unter Berücksichtigung der Nuance, allgemein noch lückenhaft. Die Bereitstellung weiterer verbesserter Reaktivfarbstoffe ist daher dringend erwünscht.

Der vorliegenden Erfindung lag die Aufgabe zugrunde, neue Reaktivfarbstoffe zu finden, die besonders für das Druckverfahren geeignet sind. Die Farbstoffe sollten einen hohen Fixiergrad und zugleich eine gute Auswaschbarkeit der nichtfixierten Anteile haben, ferner allgemein gute Echtheiten und insbesondere Nuancen im Bereich rot bis bläulich rot besitzen. Es hat sich gezeigt, daß die weiter unten definierten neuen Farbstoffe die gestellte Aufgabe weitgehend erfüllen.

Gegenstand der Erfindung sind Reaktivfarbstoffe der Formel

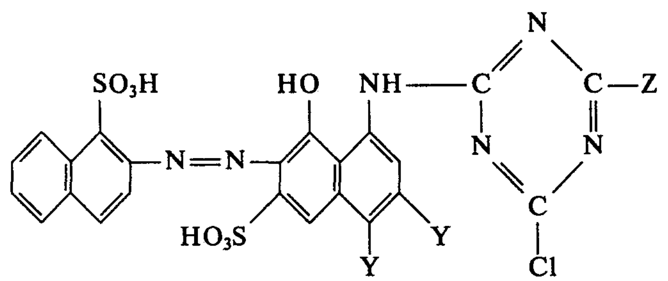

(1)

worin Z N—$C_{2-4}$-Alkyl-N-phenylamino, wobei die Alkylreste und Phenylringe weitersubstituiert sein können, ein Y Wasserstoff und das andere Y Sulfo ist.

Die obengenannten Alkylreste können geradkettig oder verzweigt sein; N—$C_{2-4}$-Alkyl-N-phenylaminoreste sind z. B. N-Äthylanilino, N-Propylanilino und N-Butylanilino.

Die obengenannten Alkyl-, und Phenyl-Reste können weitersubstituiert sein, z. B. durch: Halogen, wie Fluor, Chlor und Brom, Nitro, Cyan, Trifluormethyl, Sulfamoyl, Carbamoyl, $C_{1-4}$-Alkyl, $C_{1-4}$-Alkoxy, Acylaminogruppen, wie Acetylamino, Ureido, Hydroxy, Carboxy, Sulfomethyl und Sulfo.

Als Beispiele für den Aminorest Z in Formel (1) seien genannt: N-Äthyl-N-phenylamino, N-Propyl-N-phenylamino, N-Butyl-N-phenylamino, N-$\beta$-Cyanäthyl-N-phenylamino, N-Äthyl-2-methylphenylamino, N-Äthyl-4-methylphenylamino, N-Äthyl-3-sulfophenylamino, N-Äthyl-4-sulfophenylamino.

Bevorzugt sind Reaktivfarbstoffe der Formel (1), worin das $\alpha$-ständige Y Wasserstoff und das $\beta$-ständige Y Sulfo ist.

Bevorzugt sind ferner Reaktivfarbstoffe der Formel (1), worin Z N—$C_{2-4}$-Alkyl-N-phenylamino, worin der Alkylrest durch Cyan und der Phenylring durch Methyl, Äthyl, Butyl, Chlor, Brom oder Sulfo substituiert sein kann, ist.

Bevorzugt sind Reaktivfarbstoffe der Formel (1), worin Z ein Rest der Formel

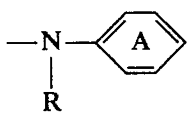

(2)

ist, worin R $C_{2-4}$-Alkyl ist, und der Phenylring A durch Methyl, Chlor oder Sulfo weitersubstituiert sein kann.

Als Alkylrest kommt für R in Formel (2) ein geradkettiger oder verzweigter Alkylrest in Betracht, der auch substituiert sein kann, z. B. durch Halogen, Hydroxy, Cyan oder Sulfo. Als Beispiele für R seien genannt: Äthyl, Propyl, Isopropyl, Butyl Isobutyl, sek.-Butyl, tert.-Butyl, $\beta$-Chloräthyl, $\beta$-Hydroxyäthyl, $\beta$-Hydroxyäthyl, $\beta$-Hydroxybutyl, $\beta$-Cyanäthyl, $\beta$-Sulfoäthyl und $\beta$-Sulfatoäthyl. Weitere Substituenten im Phenylring A sind z. B. Chlor, Methyl, Methoxy, Carboxy und Sulfo.

Bevorzugt sind Reaktivfarbstoffe der Formel (1), worin Z ein Rest der Formel (2) ist, worin R $C_{2-4}$-Alkyl ist, und der Phenylring A durch Methyl, Chlor oder Sulfo weitersubstituiert sein kann.

Bevorzugt sind insbesondere Reaktivfarbstoffe der oben definierten Art, worin R in Formel (2) Äthyl ist, und ferner, worin der Phenylring A keine weiteren Substituierten enthält.

Ein wertvoller Vertreter dieser bevorzugten Klasse ist der Reaktivfarbstoff der Formel

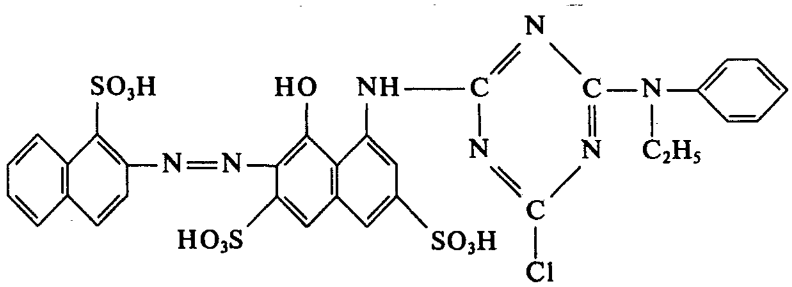

(3)

Das Verfahren zur Herstellung der Reaktivfarbstoffe der Formel (1) ist dadurch gekennzeichnet, daß man in beliebiger Folge eine diazotierte Diazokomponente der Formel

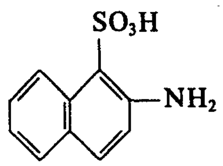

(4)

1-Amino-8-hydroxynaphthalin-3,6-disulfonsäure, 2,4,6-Trichlor-s-triazin und ein Amin der Formel

$$H-Z \quad (5)$$

kuppelt bzw. kondensiert.

Bevorzugte Reaktivfarbstoffe der Formel (1) werden hergestellt, indem man diazotierte 2-Amino-naphthalin-l-sulfonsäure, 1-Amino-8-hydroxynaphthalin-3,6-disulfonsäure, 2,4,6-Trichlor-s-triazin und ein Amin der Formel (5) beliebiger Folge miteinander umsetzt.

Eine bevorzugte Ausführungsform ist dadurch gekennzeichnet, daß man als Amin der Formel (5) N—$C_{2-4}$-Alkyl-N-phenylamin, worin der Alkylrest durch Cyan und der Phenylring durch Methyl, Äthyl, Butyl, Chlor, Brom oder Sulfo substituiert sein kann, verwendet.

Insbesondere verwendet man ein Amin der Formel

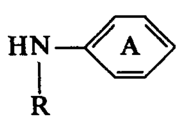

(6)

worin R $C_{2-4}$-Alkyl ist, und der Penylring A durch Methyl, Chlor oder Sulfo weitersubstituiert sein kann.

Da die einzelnen oben angegebenen Verfahrensschritte, nämlich Diazotierung, Kupplung und Kondensation in unterschiedlicher Reihenfolge, gegebenenfalls teilweise auch gleichzeitig, ausgeführt werden können, sind verschiedene Verfahrensvarianten möglich. Die für jede Teilreaktion zu verwendenden Ausgangsstoffe ergeben sich aus Formel (1). Im allgemeinen führt man die Umsetzung schrittweise nacheinander aus, wobei die Reihenfolge der einfachen Reaktionen zwischen den einzelnen Reaktionskomponenten frei gewählt werden kann.

Die wichtigsten Verfahrensvarianten sind dadurch gekennzeichnet, daß man

1. eine diazotierte Diazokomponente der Formel (4) mit 1-Amino-8-hydroxynaphthalin-3,6- oder -4,6-disulfonsäure kuppelt, die erhaltene Monoazoverbindung mit 2,4,6-Trichlor-s-triazin kondensiert und das primäre Kondensationsprodukt mit einem Amin der Formel (5) kondensiert.

Die beiden letzten Reaktionsschritte können auch in umgekehrter Reihenfolge ausgeführt werden, indem man das 2,4,6-Trichlor-s-triazin zuerst mit einem Amin der Formel (5) kondensiert und das erhaltene primäre Kondensationsprodukt mit der obengenannten Monoazoverbindung kondensiert.

2. 1-Amino-8-hydroxynaphthalin-3,6- oder -4,6-disulfonsäure mit 2,4,6-Trichlor-s-triazin kondensiert, das primäre Kondensationsprodukt mit einem Amin der Formel (5) kondensiert und das erhaltene sekundäre Kondensationsprodukt mit einer diazotierten Diazokomponente der Formel (4) kuppelt.

Auch bei dieser Herstellungsvariante kann die Kondensation mit dem Amin der Formel (5) wie unter 1. als letzter Reaktionsschritt ausgeführt werden.

Die bevorzugte Herstellungsweise des Reaktivfarbstoffes der Formel (3) ist dadurch gekennzeichnet, daß man 1-Amino-8-hydroxynaphthalin-3,6-disulfonsäure mit 2,4,6-Trichlor-s-triazin kondensiert, das primäre Kondensationsprodukt mit N-Äthylanilin kondensiert, und das erhaltene sekundäre Kon-

densationsprodukt der Formel

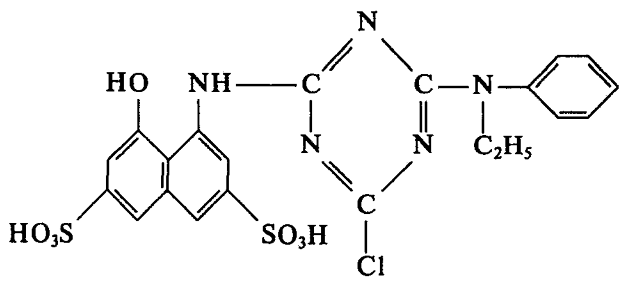

(7)

mit diazotierter 2-Aminonaphthalin-1-sulfonsäure kuppelt.

Als Ausgangsverbindungen zur Herstellung der Reaktivfarbstoffe der Formel (1) können beispielsweise die folgenden genannt werden:

(a) Diazokomponente der Formel (4):
2-Aminonaphthalin-1-sulfonsäure (Tobiassäure).
(b) 1-Amino-8-hydroxynaphthalin-3,6-disulfonsäure (H-Säure),
1-Amino-8-hydroxynaphthalin-3,6-disulfonsäure (K-Säure).
(c) 2,4,6-Trichlor-s-triazin (Cyanurchlorid).
(d) Amine der Formel (5)
N-Äthylaminobenzol, N-Propylaminobenzol, N-Butylaminobenzol, N-β-Hydroxyäthylaminobenzol, N-β--Chloräthylaminobenzol, N-β-Cyanäthylaminobenzol, N-β-Sulfoäthylaminobenzol, 1-(N-Äthylamino)-2-, -3- oder -4-methylbenzol, 1-(N-Äthylamino)-2-, -3- oder -4-äthylbenzol, 1-(N-Äthylamino)-2-, -3- oder -4-chlorbenzol, 1-N-Äthylaminobenzol-3- oder -4-sulfonsäure, 1-(N-Äthylamino)-4-butylbenzol, 1-(N-Äthylamino)-4-hexylbenzol, 1-(N-Äthylamino)-4-oxtylbenzol, 1-(N-Äthylamino)-4-vinylbenzol, 1-N-n-Butylamino-3-methylbenzol, N-Isopropylaminobenzol, N-Isobutylaminobenzol, N-sek.-Butylaminobenzol, 1-(N-Äthylamino)-4-fluorbenzol.

Die Diazotierung der Diazokomponente erfolgt in der Regel durch Einwirkung salpetriger Säure in wäßrig-mineralsaurer Lösung bei tiefer Temperatur, die Kupplung auf die Kupplungskomponenten bei schwach sauren, neutralen bis schwach alkalischen pH-Werten.

Die Kondensationen des 2,4,6-Trichlor-s-triazins mit den Kupplungskomponenten und den Aminoverbindungen der Formel (5) erfolgen vorzugsweise in wäßriger Lösung oder Suspension, bei niedriger Temperatur und bei schwach saurem, neutralem bis schwach alkalischem pH-Wert, so daß im fertigen Reaktivfarbstoff der Formel (1) noch mindestens ein Chloratom als abspaltbarer Rest übrig bleibt. Vorteilhaft wird der bei der Kondensation freiwerdende Chlorwasserstoff laufend durch Zugabe wäßriger Alkalihydroxyde, -carbonate oder -bicarbonate neutralisiert.

Die Reaktivfarbstoffe der Formel (1) können isoliert und zu brauchbaren, trockenen Färbepräparaten verarbeitet werden. Die Isolierung erfolgt vorzugsweise bei möglichst niedrigen Temperaturen durch Aussalzen und Filtrieren. Die filtrierten Farbstoffe können gegebenenfalls nach Zugabe von Coupagemitteln und/oder Puffermitteln, z. B. nach Zugabe eines Gemisches gleicher Teile Mono- und Dinatriumphosphat, getrocknet werden; vorzugsweise wird die Trocknung bei nicht zu hohen Temperaturen und unter vermindertem Druck vorgenommen. Durch Zerstäubungstrocknung des ganzen Herstellungsgemisches kann man in gewissen Fällen die erfindungsgemäßen trockenen Präparate direkt, d. h. ohne Zwischenisolierung der Farbstoffe herstellen.

Die Farbstoffe der Formel (1) sind faserreaktiv, da sie im s-Triazinrest ein abspaltbares Chloratom enthalten.

Unter faserreaktiven Verbindungen sind solche zu verstehen, die mit den Hydroxygruppen der Cellulose oder mit den Aminogruppen von natürlichen oder synthetischen Polyamiden unter Bildung kovalenter chemischer Bindungen zu reagieren vermögen.

Die Reaktivfarbstoffe der Formel (1) sind neu. Sie zeichnen sich durch hohe Reaktivität aus, und sie ergeben Färbungen mit guten Naß- und Lichtechtheiten. Besonders hervorzuheben ist es, daß die Farbstoffe eine gute Löslichkeit und hohe Farbstoff-Fixierung aufweisen, und daß sich die nicht fixierten Anteile leicht entfernen lassen.

Die Reaktivfarbstoffe der Formel (1) eignen sich zum Färben und Bedrucken der verschiedensten Materialien, wie Seide, Leder, Wolle, Superpolyamidfasern und Superpolyamidurethanen, insbesondere aber cellulosehaltiger Materialien faseriger Struktur, wie Leinen, Zellstoff, regenerierte Cellulose und vor allem Baumwolle. Sie eignen sich sowohl für das Ausziehverfahren als auch zum Färben nach dem Foulardfärbeverfahren, wonach die Ware mit wäßrigen und gegebenenfalls auch salzhaltigen Farbstofflösungen imprägniert wird, und die Farbstoffe nach einer Alkalibehandlung oder in Gegenwart von Alkali, gegebenenfalls unter Wärmeeinwirkung fixiert werden.

Sie eignen sich vor allem zum Druck, insbesondere auf Baumwolle, ebenso aber auch zum Bedrukken von stickstoffhaltigen Fasern, z. B. von Wolle, Seide oder Wolle enthaltenden Mischgeweben.

Es empfiehlt sich, die Färbungen und Drucke einem gründlichen Spülen mit kaltem und heißem Wasser, gegebenenfalls unter Zusatz eines dispergierend wirkenden und die Diffusion der nicht fixierten Anteile fördernden Mittels zu unterwerfen.

Die Herstellung der Monoazozwischenverbindungen ist in den nachfolgenden Ausführungsbeispielen nicht in allen Fällen beschrieben, sie ergibt sich jedoch ohne weiteres aus dem oben Gesagten.

In den nachfolgenden Beispielen bedeuten die Teile Gewichtsteile, die Prozente Gewichtsprozente und die Temperaturen sind in Celsiusgraden angegeben.

Beispiel 1

31,9 g 1-Amino-8-hydroxynaphthalin-3,6-disulfonsäure werden unter Zugabe von 50 ml Natriumhydroxydlösung 2 N in 100 ml Wasser gelöst. Die Lösung läßt man langsam zu einer eiskalten Suspension von 18,5 g 2,4,6-Trichlor-1,3,5-triazin in 200 ml Wasser tropfen. Dann werden im Verlauf von 2 bis 3 Stunden 50 ml Natriumhydroxydlösung 2 N in der Weise zugegeben, daß der pH-Wert des Reaktionsgemisches stets um 1 bleibt. Dem so erhaltenen primären Kondensationsprodukt gibt man eine wäßrige, salzsaure Lösung von 12,1 g N-Äthylaminobenzol zu. Der pH-Wert wird mit Natriumhydroxydlösung 2 N bei 3 gehalten, während die temperatur langsam auf 20 bis 25° ansteigt. Zur Beendigung der Kondensation erhöht man schließlich die Temperatur auf 30 bis 35° und den pH-Wert auf 4 bis 4,5.

22,3 g 2-Naphthylamin-1-sulfonsäure werden in Gegenwart von Salzsäure und 6,9 g Natriumnitrit in üblicher Weise diazotiert. Man gibt nun bei 0 bis 5° die Diazoverbindung zur oben hergestellten Suspension der reaktiven Kupplungskomponente den pH-Wert mit 20%iger Natriumcarbonatlösung bei 9. Man rührt eine Stunde nach und läßt dann die Temperatur auf 20° ansteigen. Der teilweise ausgefallene Farbstoff wird durch Zugabe von Natriumchlorid vollends ausgesalzen, abfiltriert, gewaschen und im Vakuum bei 40° getrocknet. Als freie Säure entspricht der Farbstoff der Formel

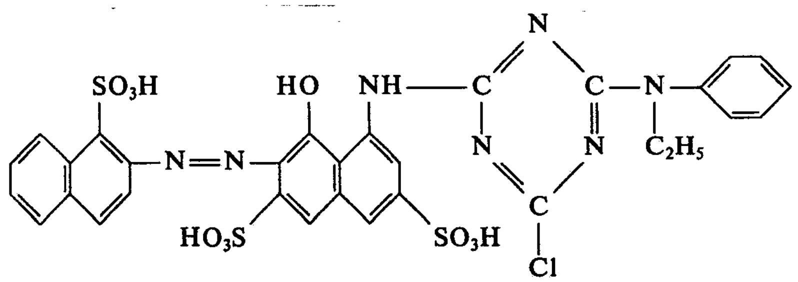

und färbt Baumwolle in stark blaustichigroten Tönen.

Eine weitere Herstellungsmöglichkeit besteht darin, daß man das saure,primäre Kondensationsprodukt aus 1-Amino-8-hydroxynaphthalin-3,6-disulfonsäure und 2,4,6-Trichlor-1,3,5-triazin bei 5 bis 15° und einem pH-Wert von 7 zu einer einen Emulgator enthaltenden Emulsion von N-Äthylaminobenzol und Wasser gibt. Nach 1$^1/_2$ Stunden ist die Kondensation beendet und man verfährt zur Herstellung des Farbstoffes wie im Beispiel 1 beschrieben. Auf diese Weise wird der Farbstoff in gleicher Reinheit und gleicher Ausbeute wie nach Beispiel 1 erhalten.

Nach Arbeitsweise des Beispiels 1 resultieren ähnliche Farbstoffe, wenn man sinngemäß die in der nachfolgenden Tabelle aufgeführten Diazo-, Kupplungs- und Amin-Komponenten verwendet.

Tabelle

| Nr. | Diazokomponente | Kupplungskomponente | Aminkomponente | Nuance |
|---|---|---|---|---|
| 2 | 2-Naphthylamin-1-sulfonsäure | 1-Amino-8-hydroxynaphthalin-3,6-disulfonsäure | 3-Äthylamino-1-methylbenzol | blaustichigrot |
| 3 | 2-Naphthylamin-1-sulfonsäure | 1-Amino-8-hydroxynaphthalin-3,6-disulfonsäure | 4-Äthylamino-1-methylbenzol | blaustichigrot |
| 4 | 2-Naphthylamin-1-sulfonsäure | 1-Amino-8-hydroxynaphthalin-3,6-disulfonsäure | 4-Äthylaminobenzol-1-sulfonsäure | blaustichigrot |
| 5 | 2-Naphthylamin-1-sulfonsäure | 1-Amino-8-hydroxynaphthalin-3,6-disulfonsäure | N-n-Propylaminobenzol | blaustichigrot |

Tabelle (Fortsetzung)

| Nr. | Diazokomponente | Kupplungskomponente | Aminkomponente | Nuance |
|---|---|---|---|---|
| 6 | 2-Naphthylamin-1-sulfonsäure | 1-Amino-8-hydroxynaphthalin-3,6-disulfonsäure | 2-Äthylamino-1-methylbenzol | blaustichig-rot |
| 7 | 2-Naphthylamin-1-sulfonsäure | 1-Amino-8-hydroxynaphthalin-3,6-disulfonsäure | N-n-Butylaminobenzol | blaustichig-rot |
| 8 | 2-Naphthylamin-1-sulfonsäure | 1-Amino-8-hydroxynaphthalin-4,6-disulfonsäure | N-Äthylaminobenzol | blaustichig rot |
| 9 | 2-Naphthylamin-1-sulfonsäure | 1-Amino-8-hydroxynaphthalin-4,6-disulfonsäure | 2-Äthylamino-1-methylbenzol | blaustichig-rot |
| 10 | 2-Naphthylamin-1-sulfonsäure | 1-Amino-8-hydroxynaphthalin-4,6-disulfonsäure | 4-Äthylaminobenzol-1-sulfonsäure | blaustichig-rot |
| 11 | 2-Naphthylamin-1-sulfonsäure | 1-Amino-8-hydroxynaphthalin-4,6-disulfonsäure | 3-n-Butylamino-1-methylbenzol | blaustichig-rot |
| 12 | 2-Naphthylamin-1-sulfonsäure | 1-Amino-8-hydroxynaphthalin-4,6-disulfonsäure | N-n-Propylaminobenzol | blaustichig-rot |
| 13 | 2-Naphthylamin-1-sulfonsäure | 1-Amino-8-hydroxynaphthalin-4,6-disulfonsäure | 3-Äthylam no-1-methylbenzol | blaustichig-rot |
| 14 | 2-Naphthylamin-1-sulfonsäure | 1-Amino-8-hydroxynaphthalin-4,6-disulfonsäure | 4-Äthylamino-1-methylbenzol | blaustichig-rot |

Färbevorschrift 1

2 Teile des gemäß Beispiel 1 erhaltenen Farbstoffes werden unter Zusatz von 5 bis 20 Teilen Harnstoff und 2 Teilen kalzinierter Soda in 100 Teilen Wasser bei 20 bis 50° gelöst. Mit der erhaltenen Lösung wird ein Baumwollgewebe imprägniert, so daß es um 60 bis 80% seines Gewichtes zunimmt, und dann getrocknet. Danach wird während $1^1/_2$ bis 5 Minuten bei 140 bis 210° thermofixiert, dann während einer Viertelstunde in einer 0,1%igen kochenden Lösung eines ionenfreien Waschmittels geseift, gespült und getrocknet.

Färbevorschrift 2

2 Teile des gemäß Beispiel 1 erhaltenen Farbstoffes werden in 2000 Teilen Wasser unter Zusatz von 120 Teilen Kochsalz oder kalziniertem Glaubersalz bei 75° gelöst. Man geht mit 100 Teilen eines Baumwollgewebes in dieses Färbebad ein und hält die Temperatur während 30 bis 60 Minuten konstant. Danach werden 10 Teile kalzinierter Soda und 4 ml Natronlauge (36° Bé) zugegeben. Die Temperatur wird weitere 45 bis 60 Minuten bei 75 bis 80° gehalten, dann wird während 15 Minuten in einer 0,1%igen kochenden Lösung eines ionenfreien Waschmittels geseift, gespült und getrocknet.

Färbevorschrift 3

2 Teile des gemäß Beispiel 1 erhaltenen Farbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so daß es um 75% seines Gewichtes zunimmt, und dann getrocknet.

Danach imprägniert man das Gewebe mit einer 20° warmen Lösung, die pro Liter 5 g Natriumhydroxyd und 300 g Natriumchlorid enthält, quetscht auf 75% Gewichtszunahme ab, dämpft die Färbung während 30 Sekunden bei 100 bis 101°, spült, seift während einer Viertelstunde in einer 0,3%igen kochenden Lösung eines ionenfreien Waschmittels, spült und trocknet.

Färbevorschrift 4

2 Teile des gemäß Beispiel 1 erhaltenen Farbstoffes werden in 100 Teilen Wasser gelöst. Die Lösung gibt man zu 1900 Teilen kaltem Wasser, fügt 60 Teile Natriumchlorid zu und geht mit 100 Teilen eines Baumwollgewebes in dieses Färbebad ein. Man steigert die Temperatur auf 60°, wobei nach 30 Minuten 40 Teile kalzinierte Soda und nochmals 60 Teile Natriumchlorid zugegeben werden. Man hält die Temperatur 30 Minuten auf 60°, spült und seift dann die Färbung während 15 Minuten in einer 0,3%igen kochenden Lösung eines ionenfreien Waschmittels, spült und trocknet.

Druckvorschrift

2 Teile des gemäß Beispiel 1 hergestellten Farbstoffes werden unter schnellem Rühren in 100 Teile einer Stammverdickung, enthaltend 45 Teile 5%ige Natriumalginatverdickung, 32 Teile Wasser, 20 Teile Harnstoff, 1 Teil m-nitrobenzolsulfonsaures Natrium sowie 2 Teile Natriumcarbonat, eingestreut. Mit der so erhaltenen Druckpaste bedruckt man ein Baumwollgewebe auf einer Rouleauxdruckmaschine und dämpft den erhaltenen bedruckten Stoff 4 bis 8 Minuten bei 100° in gesättigtem Dampf. Das bedruckte Gewebe wird dann in kaltem und heißem Wasser gründlich gespült, wobei sich die nicht chemisch fixierten Anteile sehr leicht von der Faser entfernen lassen, und anschließend getrocknet.

**Patentansprüche**

1. Reaktivfarbstoffe der Formel

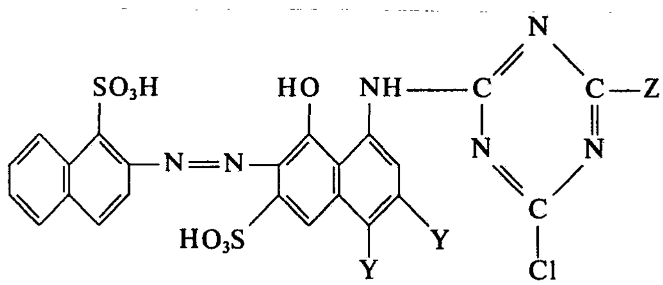

(1)

worin Z $N-C_{2-4}$-Alkyl-N-phenylamino, wobei die Alkyl-Reste und Phenyl- weitersubstituiert sein können, ein Y Wasserstoff und das andere Y Sulfo ist.

2. Reaktivfarbstoffe gemäß Anspruch 1, worin das $\alpha$-ständige Y Wasserstoff und das $\beta$-ständige Y Sulfo ist.

3. Reaktivfarbstoffe gemäß Anspruch 1 oder 2, worin Z $N-C_{2-4}$-Alkyl-N-phenylamino, worin der Alkylrest durch Cyan und der Phenylring durch Methyl, Äthyl, Butyl, Chlor, Brom oder Sulfo substituiert sein kann, ist.

4. Reaktivfarbstoffe gemäß Anspruch 1, worin Z ein Rest der Formel

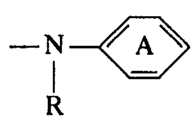

(2)

ist, worin R $C_{2-4}$-Alkyl ist, und der Phenylring A durch Methyl, Chlor oder Sulfo weitersubstituiert sein kann.

5. Reaktivfarbstoffe gemäß Anspruch 4, worin R Äthyl ist.

6. Reaktivfarbstoffe gemäß Anspruch 4, worin der Penylring A keine weiteren Substituenten enthält.

7. Reaktivfarbstoff gemäß Anspruch 6 der Formel

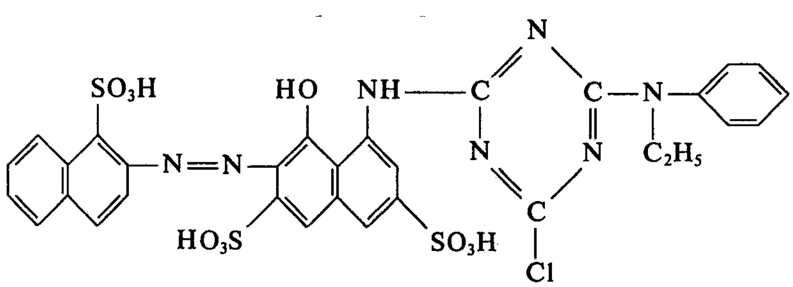

(3)

8. Verfahren zur Herstellung von Reaktivfarbstoffen gemäß Anspruch 1, dadurch gekennzeichnet, daß man in beliebiger Folge eine diazotierte Diazokomponente der Formel

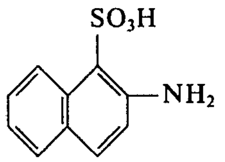

(4)

1-Amino-8-hydroxynaphthalin-3,6- oder -4,6-disulfonsäure, 2,4,6-Trichlor-s-triazin und ein Amin der Formel

$$H-Z \quad (5)$$

kuppelt bzw. kondensiert.

9. Verfahren gemäß Anspruch 8, zur Herstellung des Reaktivfarbstoffes der Formel (3) dadurch gekennzeichnet, daß man 1-Amino-8-hydroxynaphthalin-3,6-disulfonsäure mit 2,4,6-Trichlor-s-triazin kondensiert, das primäre Kondensationsprodukt mit N-Äthylanilin kondensiert, und das erhaltene sekundäre Kondensationsprodukt mit diazotierter 2-Aminonaphthalin-1-sulfonsäure kuppelt.

10. Verwendung der Reaktivfarbstoffe gemäß den Ansprüchen 1 bis 7 bzw. der gemäß den Ansprüchen 8 und 9 erhaltenen Reaktivfarbstoffe zum Färben und Bedrucken.

11. Verwendung gemäß Anspruch 10 zum Färben von Cellulosefasern.

## Claims

1. A reactive dye of the formula

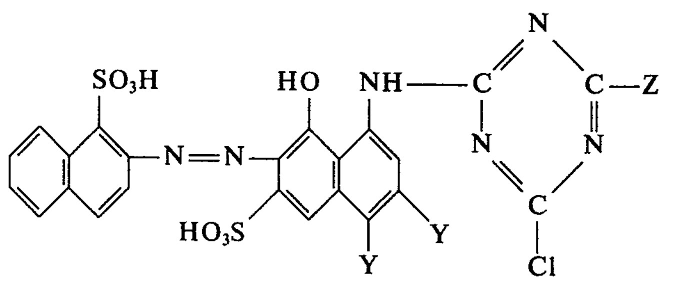

(1)

wherein Z is N-($C_2$—$C_4$)alkyl-N-phenylamino, wherein alkyl and phenyl may be further substituted, and one Y is hydrogen and the other is sulfo.

2. A reactive dye according to claim 1, wherein the $\alpha$-oriented Y is hydrogen and the $\beta$-oriented Y is sulfo.

3. A rective dye according to either of claims 1 or 2, wherein Z is N-($C_2$—$C_4$)alkyl-N-phenylamino, wherein alkyl may be substituted by cyano and phenyl by methyl, ethyl, butyl, chlorine, bromine or sulfo.

4. A reactive dye according to claim 1, wherein Z is a radical of the formula

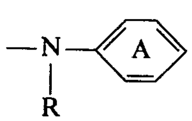

(2)

wherein R is $C_2$—$C_4$alkyl and the phenyl ring A may be further substituted by methyl, chlorine or sulfo.

5. A reactive dye according to claim 4, wherein R is ethyl.

6. A reactive dye according to claim 4, wherein the phenyl ring A contains no further substituents.

7. The reactive dye according to claim 6 of the formula

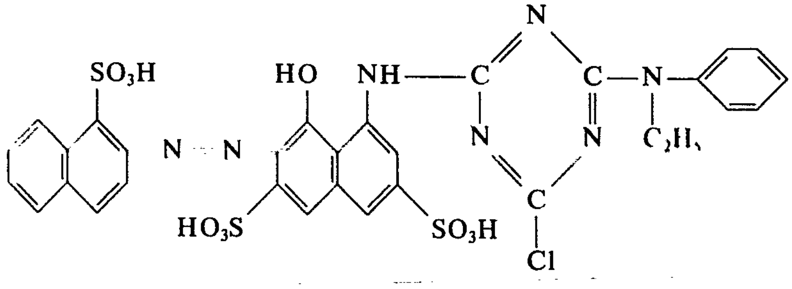

(3)

8. A process for the preparation of a reactive dye as claimed in claim 1, which process comprises reacting together, in any order, a diazotised diazo component of the formula

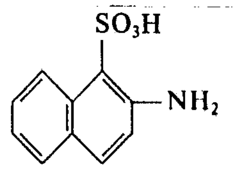

(4)

1-amino-8-hydroxynaphthalene-3,6- or -4,6-disulfonic acid, 2,4,6-trichloro-s-triazine and an amine of the formula

$$H-Z \quad (5)$$

by coupling and condensation.

9. A process according to claim 8 for the preparation of the reactive dye of the formula (3), which process comprises condensing 1-amino-8-hydroxynaphthalene-3,6-disulfonic acid with 2,4,6-trichloro-s-triazine, condensing the primary condensation product with N-ethylaniline, and coupling the secondary condensation product thereby obtained with diazotised 2-aminonaphthalene-1-sulfonic acid.

10. Use of a reactive dye as claimed in any one of claims 1 to 7 or of a reactive dye prepared as claimed in either claim 8 or claim 9 for dyeing or printing.

11. Use according to claim 10 for dyeing cellulose fibres.

**Revendications**

1. Colorants réactifs ayant la formule:

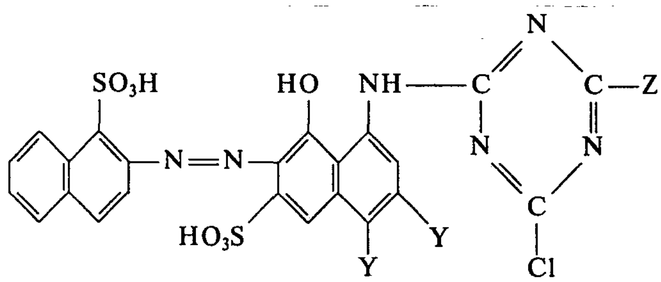

(1)

dans laquelle Z est un groupe N-alkyl($C_{2-4}$)-N-phénylamino, le reste alkyle et le noyau phényle pouvant être encore substitués, un Y est l'hydrogène et l'autre Y est un groupe sulfo.

2. Colorants réactifs selon la revendication 1, dans lesquels l'Y en position $\alpha$ est l'hydrogène et l'Y en position $\beta$ est un groupe sulfo.

3. Colorants réactifs selon la revendication 1 ou 2, dans lesquels Z est un groupe N-alkyl($C_{2-4}$)-N-phénylamino, ou le reste alkyle peut être substitué par un radical cyano et le noyau phényle peut être substitué par un radical méthyle, éthyle, butyle, chloro, bromo ou sulfo.

4. Colorants réactifs selon la revendication 1, dans lesquels Z est un reste de formule:

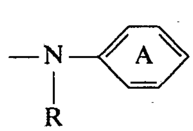

(2)

dans laquelle R est un groupe alkyle en $C_{2-4}$ et le noyau phényle A peut être encore substitué par un radical méthyle, chloro ou sulfo.

5. Colorants réactifs selon la revendication 4, dans lesquels R est un groupe éthyle.

6. Colorants réactifs selon la revendication 4, dans lesquels le noyau phényle A ne contient aucun autre substituant.

7. Colorant réactif selon la revendication 6 qui a al formule:

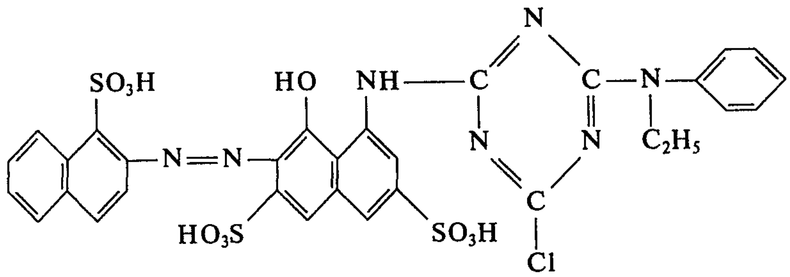

(3)

8. Procédé de préparation des colorants réactifs selon la revendication 1, caractérisé par le fait qu'on copule ou qu'on condense, dans un ordre quelconque, un constituant de diazotation diazoté de formule:

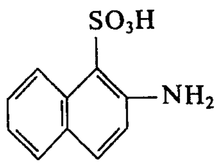

(4)

l'acide 1-amino-8-hydroxynaphthalène-3,6-ou 4,6-disulfonique la 2,4,6-trichloro-s-triazine et une amine de formule:

H—Z (5)

9. Procédé selon la revendication 8, pour la préparation du colorant réactif de formule (3), caractérisé par le fait qu'on condense l'acide 1-amino-8-hydroxynaphthalène-3,6-disulfonique avec la 2,4,6-trichloro-s-triazine, qu'on condense le produit de condensation primaire avec la N-éthylaniline, et qu'on copule le produit de condensation secondaire obtenu avec l'acide 2-aminonaphthalène-1-sulfonique diazoté.

10. Utilisation des colorants réactifs selon les revendications 1 à 7, ou des colorants réactifs obtenus selon les revendications 8 et 9, pour la teinture et l'impression.

11. Utilisation selon la revendication 10, pour la teinture des fibres cellulosique.